(19) **Europäisches Patentamt / European Patent Office / Office européen des brevets**

(11) **EP 2 271 696 B1**

(12) **EUROPEAN PATENT SPECIFICATION**

(45) Date of publication and mention
of the grant of the patent:
**28.03.2012 Bulletin 2012/13**

(21) Application number: **09726883.3**

(22) Date of filing: **30.03.2009**

(51) Int Cl.:
*C08G 63/82* (2006.01)     *C08G 63/91* (2006.01)

(86) International application number:
**PCT/EP2009/053730**

(87) International publication number:
**WO 2009/121830 (08.10.2009 Gazette 2009/41)**

(54) **METHOD FOR MANUFACTURING STABLE POLYLACTIDE**

VERFAHREN ZUR HERSTELLUNG VON STABILEM POLYLACTID

PROCÉDÉ DE FABRICATION D'UN POLYLACTIDE STABLE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **31.03.2008 EP 08103226**

(43) Date of publication of application:
**12.01.2011 Bulletin 2011/02**

(73) Proprietor: **PURAC Biochem BV
4206 AC Gorinchem (NL)**

(72) Inventor: **DE VOS, Siebe Cornelis
NL-6846 JL Arnhem (NL)**

(74) Representative: **De Vries & Metman
Overschiestraat 180
1062 XK Amsterdam (NL)**

(56) References cited:
**EP-A- 0 882 751     WO-A-99/50345
US-A- 5 844 066     US-A- 5 998 552
US-A- 6 153 306     US-B1- 6 559 244**

EP 2 271 696 B1

**Description**

The present invention pertains to a method for manufacturing stable polylactide.

Polylactide, also indicated as polylactic acid, is a promising material in the field of biobased polymers for, e.g., packaging material. It is also an attractive material in the biomedical field due to its high biocompatibility and resorbability. The fact that it can be derived from renewable resources makes it particularly attractive as a sustainable alternative for polymers derived from oil. Polylactide can be obtained by polymerisation of lactic acid through a condensation reaction. However, Dorough recognized and disclosed in US 1,995,970 that the resulting polylactide is of limited value because polycondensation does not yield the required high molecular weight polyesters.

Therefore, most publications on processes for the production of polylactide disclose a first step wherein lactic acid is polymerised to from a pre-polymer, which is subsequently depolymerised by means of a catalyst to form crude lactide (i.e. the ring-closure reaction), and the crude lactide is after purification used as starting material in the second step, i.e. the preparation of polylactide by ring-opening polymerization. For the purpose of this description the terms polylactide and polylactic acid are used interchangeably.

A general problem that is often encountered in high temperature polymer processing is insufficient stability of the product against depolymerization. Unless suitable precautions are taken, polylactide is, depending on temperature and pressure conditions, susceptible to discolouration and molecular weight degradation due to lactide formation.

US 5,338,322 describes a melt-stable lactide polymer comprising a plurality of polylactide polymer chains preferably having a number average molecular weight of about 10 000 to about 300 000 g/mol, lactide in a concentration of less than about 2 wt.%, water in a concentration of less than about 1000 ppm, and a stabilise. The stabiliser may include antioxidants or water scavengers. Preferred antioxidants are phosphite-containing compounds, hindered phenolic compounds, or other phenolic compounds. The publication indicates that it is preferred to keep the catalyst concentration low, to increase the stability of the product. This, however, leads to a decreased polymerisation rate. Stability of the product can also be increased by removing the catalyst from the polymer using a solvent, which requires an additional processing step, or by adding a catalyst deactivating agent. Suitable catalyst deactivating agents are cited to be hindered alkyl, aryl and phenolic hydrazides, aides of aliphatic and aromatic mono- and it acids, cyclic amides, hydrazones and bishydrazones of aliphatic and aromatic aldehydes, hydrazides of aliphatic and aromatic mono- and dicarboxylic acids, bis-acylated hydrazine derivatives, heterocyclic compounds and mixtures thereof. It has appeared, however, that these compounds are not always effective in stabilising the polylactide.

US 6,353,036 describes a method for stabilising a lactic acid residue containing polymer composition using a deactivating agent selected from phosphite anti-oxidants and multifunctional carboxylic acids. Again, it has appeared that these compounds are not always effective in stabilising the polylactide.

WO099/50345 describes a process for manufacturing PLA with a low content of lactic acid residue which contains between 0.01 and 2 wt.% of a catalyst deactivating agent which inclues, on average more than two carboxylic acid groups per molecule. For example, the deactivating agent is polyacrylic acid.

US 6,153,306 describes a polylactide-coated paper or board product.

US 5,998, 52 describes a process for manufacturing PLA with specific properties. The use of various stabilising agents is disclosed.

US 6,559,244 describes the addition of a peroxide to a PLA during melt-processing.

EP 882751 describes a method for preparing a biodegradable polyester such as PLA using glycerol or butyrclactone as cocatalysts.

US 5,844,066 describes the addition of an organic chelating agent to a lactic acid based polyester to deactivate the esterification catalyst.

In the art cf manufacturing polylactide, there is a continuous need for new processes that find a balance between a number of different, often contradictory, requirements. To name but a few, a high polymerisation rate is a desirable feature. Another desirable feature is a high stability of the resulting product, in particular a high stability in the melt. Further, it may sometimes be desirable to keep the composition as simple as possible, e.g., by refraining from the addition of co-catalysts to increase reaction rate, or by refraining from the addition of additional stybilisers. A further desirable feature is a good colour; a clearer transparent product is more attractive than a more yellowish product. Further, it is desired two decrease or prevent the formation of lactide vapour, which can deposit on processing apparatus. The presence of substantial amounts of lactide in the polymer may also detrimentally affect the mechanical propertied and processability of the polymer.

In accordance with the present invention, this need is ad-dressed by the provision of a process for manufacturing polylactide comprising the steps of combining lactide with a polymerisation catalyst, subjecting the mixture to polymerization conditions to form polylactide in the liquid state, adding an organic peroxide, subjecting the liquid polylactide to a devolatilisation step, and allowing the polylactide to solidify.

It is noted that WO95/18169 describes a processable poly(hydroxyacid), e.g., a polylactide, which has been star bilised by adding to the polymer during melt-processing 0.05-3 wt.% of a peroxy compound the degradation of which produces one or more acid radicals. The product has good melt strength and elasticity. In this reference the peroxy compound is added during melt professing of the polymer, and not, as required in the present invention, between polymerisation and iron. Tit was found that the addition of the organic peroxide in accordance with the invention at this specific moment in the manufacturing process leads to an increased polymer yield, and to a decrease in polymer depolymerisation.

It has been found that in the process according to the invention a high polymerisation rate can be combined with a high stability of the product, in particular a high stability in the melt. Further, in one embodiment, the addition of a co-catalyst can be dispensed with. Further, the resulting product has a good colour, good stability, and a low lactide content.

As indicated above, the first step in the process according to the invention is combining lactide with a polymerisation catalyst.

The lactide used as starting material in the present invention may be L-lactide (derived from two L-lactic acid molecules), D-lactide (derived from two D-lactic acid molecules), mesolactide (derived from an L-lactic acid molecule and a D-lactic acid molecule), or a mixture of two or more of the above. A 50/50 mixture of L-lactide and D-lactide with a melting point of about 126 its often referred to in the literature as D,L-lactide. The process according to the invention is particularly attractive when lactides with high melting points are used. Therefore, in one embodiment of the present invention, the lactide used as starting material is L-lactide with up to 50% of other lactides. For example, the lactide used as starting material may be L-lactide containing between 50 and 10% D-lactide. In another embodiment, the lactide is substantially pure L-lactide, where the wording substantially pure means that it may contain up to 10 wt.% of other lactides, for example, up to 5 wt.%, or up to 2 wt.%. In a further embodiment, the lactide is substantially pure D-lactide, where the wording substantially pure means that it may contain up to 10 wt.% of other lactides, for example, up to 5 wt.%, or up to 2 wt.%.

Suitable catalysts for use in the invention are those known in the art for lactide polymerisation. In one embodiment, the catalyst used in the present invention is a catalyst of the formula

$$(M)(X1, X2 \ldots Xm)n$$

where M is selected from metals of Group 2, 4, 8, 9, 10, 12, 13, 14, and 15 of the Periodic Table of Elements, (17, X2 ... Xm) are independently selected from the group of alkyls, aryls, oxides, carboxylates, halides, alkoxides, alkylesters, m is an integer ranging from 1 to 6, and n is an integer ranging from 0 to 6, wherein the values for m and n depend on the oxidation state of the metal ion.

Within Group 2 the use of Mg is preferred. Within Group 4 the use of Ti and Zr is preferred. Within Group 8 the use of Fe is preferred. Within Group 12 the use of Zn is preferred. Within Group 13 the use of Al, Ga, In, and Tl may be mentioned. Within Group 14 the use or Sn and Pb is preferred. Within Group 15 the use of Sb and Bi is preferred. In general, the use of metals of Groups 4, 14 and 15 is preferred. It is preferred for M to be selected from Sn, Pb, Sb, Bi, and Ti. The use of a Sn-based catalyst may be particularly preferred.

For halides tin halides like SnCl2, SnBr2, SnCl4, and SnBr4 may be mentioned. For oxides SnO and PbO may be mentioned. Within the group of alkyl carboxylates, octoates (=2-ethyl hexanoates), stearates, and acetates may be mentioned, e.g., in the form of Sn-octoate, (also known as Sn (II) bis 2-ethyl hexanoate), Sn-stearate, dibutyltin diacetate, butyltin tris(2-ethyl hexanoate), Sb (2-ethyl hexanoate), Bi (2-ethyl hexanoate), Sb triacetate, Na (2-ethyl hexanoate), Ca stearate, Mg stearate, and Zn stearate.

Other suitable compounds include tetraphenyltin, Sb tris(ethylene glycoxid), aluminum alkoxides, and zinc alkoxides.

In one embodiment, M in the above formula is a metal ion in its lowest oxidation state, where the metal ion also possesses a higher oxidation state. Preferred metal ions within this group include Sn(II), Pb(II), Sb(III), Bi (III), and Ti (II). It is believed that the combination of a catalyst of this particular type and a peroxide leads to a highly stable polylactide composition. Within this embodiment the use of a Sn(II) catalyst may be particularly preferred. For further specification of suitable catalysts within this embodiment reference is made to what has been stated above.

The use of Sn(II)-bis(2-ethylhexanoate), also indicated as tin octoate, may be preferred, since this material is commercially available and soluble in liquid lactide. Further, the compound has received FDA approval.

The amount of catalyst used has impact on the polymerisation rate, and on the stability of the final product. When more catalyst is used, the polymerisation velocity increases. On the other hand, in prior art processes, the presence of more catalyst has been known to detrimentally affect the melt stability of the product. In the present invention, the post-polymerisation addition of the peroxide counteracts the stability issues, and therefore it is possible to use higher catalyst concentrations than have conventionally been used in the art.

The catalyst concentration is generally at least 5 ppm, calculated as metal weight, more in particular at least 10 ppm. Where larger amounts are used than conventionally, the catalyst concentration is at least 30 ppm, more in particular at least 50 ppm. The catalyst concentration is generally at most 1300 ppm, in particular at most 500 ppm.

If so desired, the polymerisation step may be carried out in the presence of a co-catalyst, that is, a compound that further increases the polymerisation rate. Suitable co-catalysts are known in the art. Reference is made, for example, to US 6, 166, 169. This reference describes co-catalysts of the formula

$$(Y)(R1, R2 \ldots Rq)p$$

where Y is an element selected from group 15 or 16 of the periodic system, (R1, R2 ... Rq) is a substituent, selected from one or the compound classes of alkyl, aryls, oxides, halogenides, oxyalkyls, aminoalkyls, thioalkyls, phenoxides, aminoaryls, thioaryls, q is a whole number ranging from 1 to 6, and p is a whole number ranging from 0 to 6. The co-catalyst is generally used in an amount of the same order as the amount of catalyst, e.g., in a molar ratio of catalyst to co-catalyst of 50:1 to 1:50. US 6, 166, 169 indicates that the co-catalyst preferably includes a phosphorous compound, in particular P(R1, R2, R3)3 with R1, R2, R3 being independently selected from aryl and alkyl groups. P(Ph)3 is indicated to be particularly preferred. Selection of an appropriate co-catalyst is within the scope of the person skilled in the art.

However, in one embodiment according to the invention, the process is carried out in the substantial absence of added phosphorus-containing compounds, because it is suspected that they may interfere with the stabilising activity of the peroxide. The wording "in the substantial absence of added phosphorus-containing compounds" means that no phosphorus-containing compounds are added to the system in an amount which will significantly influence the polymerisation rate of the polymer.

In one embodiment of the present invention, the polymerisation is carried out in the substantial absence of added co-catalyst. This embodiment may be attractive where it is desires to limit the number of different components in the polymer system. The wording "in the substantial absence of added co-catalyst" means that no co-catalyst is added to the system in an amount that will significantly influence the polymerisation rate of the polymer. Within this embodiment it may be preferred to use an increased catalyst concentration, as is discussed above.

The mixture is subjected to polymerisation conditions to form polylactide. The polymerisation can be carried out in a batch process, in a semi-continuous process, or in can continuous process. Performing the polymerisation in a continuous process is considered preferred.

The polymerisation is preferably performed in inert conditions. The number average molar mass (Mn) of the final product in gram/mole is generally at least 10 000, more in particular at least 30 000, still more in particular at least 50 000. The upper limit of the molar mass is not critical to the process according to the invention and will depend. Generally it is below 500 000, more specifically below 300 000.

The polymerisation is generally carried out at a temperature of at least 100°C, in particular at least 160°C. The polymerisation temperature is generally at most 240°C, more in particular at most 220°C.

The polymerisation reaction is carried out until a conversion of at least 80% is obtained, calculated on the starting lactide. More in particular, the polymerisation may be carried out until a conversion of at least 87% is obtained, more in particular at least 95%. Maximum theoretical conversion is of course 100%, but for thermodynamic reasons this will not be obtained. The obtained conversion will generally be at most 99%. Conversion is to be determined directly after polymerisation.

The next step in the process according to the invention is the addition of an organic peroxide to the polymer. This will generally take place at a temperature where the polylactide is in the molten state. More in particular, this will take place at a temperature within the range given for the polymerisation temperature above.

The addition of peroxide may be started when the polymerisation reaction has been completed, that is, when the final conversion percentage is obtained.

However, in the case of manufacturing high molecular weight polymers it may be attractive to add the peroxide to the composition after the polymerisation has been completed to a substantial degree, e.g., when the conversion is above 50%, more in particular above 60%, still more in particular above 70%, but before the final conversion percentage has been obtained. If so desired, the peroxide can be added in two or more portions at different degrees of conversion.

In one embodiment the peroxide is added in at least two parts, with part of the peroxide being added when the conversion is above 50% but below the final conversion percentage is reached, and the other part being added after the final conversion percentage has been reached. Also in this embodiment, the peroxide can be added in two or more portions at different degrees of conversion.

Suitable peroxides are those which exhibit a half-life that is such that at least part of the peroxide decomposes when it is combined with the polymer at the stated temperatures. It should be taken into account that when the peroxide is added to the melt the stability of the peroxide should be such that the peroxide has not decomposed to an unacceptable extent before it is homogenised through the melt. This may be of particular importance when preparing very viscous material. In one embodiment, the peroxide should be such that at least 30% of the peroxide decomposes between 1 and 60 seconds at a temperature of 150-220°C. More specifically, at least 90% of the peroxide decomposes between 10 and 30 seconds at a temperature of 150-220°C.

In general, organic peroxide of the following groups can be used, provided that they meet the requirements above: dialkyl peroxides of the formula R-O-O-R', hydroperoxides of the formula R-O-O-H, peroxyesters of the formula R-(CO)-O-O-R', diacylperoxides of the formula R-(CO)-O-O-(CO)-R', peroxycarbonates of the formula R-O- (CO)-O-O-R', peroxydicarbonates of the formula R-O-(CO)-O-O-(CO)-O-R', and peroxyketals of the formula C(O-O-R)2R'R". In all of the above, R, R', and R" are organic alkyl or aryl groups with 1-20 carbon atoms, straight or branched, substituted or non-substituted, saturated or unsaturated, and whether or not provided with heteroatoms. Suitable peroxides are known in the art, and with the guidelines given above it is within the scope of the skilled person to select a suitable material.

Suitable peroxides include benzoyl peroxide, dilauroyl peroxide, tert-butylperoxy-diethylacetate, tert-butylperoxy-2-ethyl hexanoate, tert-butylperoxy-isobutyrate, tert-butylperoxy-acetate, tert-butylperoxy-benzoate, and dibenzoyl peroxide.

The peroxide is generally added in an amount of at least 0.01 wt.%, in particular in an amount of at least 0.05 wt.%. The amount of peroxide added is generally at most 3 wt.%, in particular at most 2 wt.%.

While not wishing to be bound by any theory, one of the theories that may explain the effect of the peroxide to stabilise the polylactide in whole or in part is believed to be a deactivation activity with regard to the catalyst.

In some embodiments of the present invention it is believed that the catalyst is deactivated in whole or in part by conversion of the metal in the catalyst to a higher oxidation state, where it is no longer - or less- active as (de) polymerisation catalyst.

The peroxide is mixed through the polymerised product in a conventional manner.

After addition of the peroxide, the liquid polylactide is subjected to a devolatilisation step. The devolatilisation step is carried out to remove volatiles, in particular unreacted monomer. In the product resulting from the devolatilisation step, lactide monomer is generally present in an amount of less than 2 wt.%, more in particular in an amount of less than 1 wt.%, still more in particular in an amount of less than 0.5 wt.%. Devolatilisation processes are well known in the art of polylactide manufacture and require no further elucidation.

After the devolatilisation step the polylactide is allowed to solidify. It can be converted to particles in manners known in the art.

The present invention will be elucidated by the following examples, without being limited thereto or thereby.

Example 1

Poly(L-lactide) was prepared by melt-polymerization of Puralact L (ex PURAC), which is a polymer-grade L-lactide ((3S-cis)-3,6-dimethy-1,4-dioxane-2,5-dione) in a 1-Litre Büchi Laboratory Autoclave equipped with a BEP 280 magnet coupling, an anchor stirrer, a thermometer, and an external oil bath for heating. First the jacketed stainless steel reactor was heated until the oil temperature was 160°C. Next the reactor was flushed with nitrogen and filled with 495 grams (3.44 moles) of solid L-lactide. Before closing the reactor, it was flushed again with nitrogen. After closing the reactor, the oil-temperature was raised and the lactide was molten under agitation. When the temperature of the melt had reached 130°C, 800 ppm of hexanol initiator (ex. Acros) and 200ppm or stannous octoate polymerization catalyst (SnOct$_2$, used as received from Sigma Aldrich) were added. Again the reactor was purged with nitrogen and the temperature of the melt was raised to 180°C. From the moment the initiator and catalyst were added, the polymerization reaction started, als could be observed from the increase in melt viscosity. After 90 minutes, lactide conversion was 96% and the molten polymer was discharged from the reactor, quenched with ice and cut into small pieces, which were milled into granules of <200 micron by means of a Retch Ultra Centrifugal Mill and Sieve Shaker. The particles were brought to their equilibrium lactide concentration by keeping them at 130°C for 96 hours.

GPC analysis of the PLLA homopolymer with PS calibration, chloroform as the eluent, and light scattering detection revealed a weight-average molecular weight Mw of 114kg/mol.

The thus obtained PLLA is not melt-stable and suffers from thermal catalytic depolymerization upon heating.

The PLLA obtained above was treated with a commercially available liquid hydroperoxide in order to improve melt stability.

20 grams of the PLLA particles and a solution of 0.4 grams of hydroperoxide in 5 grams of methanol were brought into a round bottom flask. The flask was connected to the Büchi RotaVap R-200 and lowered into an oil bath with a temperature of 70°C. Under continuous rotation, the hydroperoxide was homogeneously coated on the PLLA granules and the methanol was evaporated at: a temperature of 70°C at the same time.

Melt viscosity of the peroxide-coated PLLA granules was determined by means of an Anton-Paar Physica MCR 301 Rheometer with a plate-plate geometry (D=25mm, gap width 1mm). Plate and hood of the rheometer were heated to 19C°C. After reaching the set temperature, the sample was heated for 15 minutes between the plates. Redundant material was removed from the plates and complex viscosity of the material was found to be 650Pa.s at 190°C at an angular frequency of 10s$^{-1}$ and 10% strain.

Comparative Example 1

20 grams of the PLLA particles and 5 grams of methanol were brought into a round bottom flask. The evaporation procedure of Example 1 was repeated, except that no peroxide was present.
Complex viscosity of the thermoplastic material after melting at 190°C in the Anton-Paar plate-plate ways 115Pa.s.
This result indicates that the presence of hydroperoxide as reported in Example 1 effectively counteracted degradation during melting of the material in the rheometer.

Comparative Example 2

Lactide was subjected to identical polymerization conditions as described in Example 1, but 0.10 wt.-% of the hydroperoxide were added at the beginning of the polymerisation together with the tin polymerization catalyst. It was found that after 90 min conversion was 88% instead of 96% and Mw was only 64kg/mol.

Example 2

PLLA was prepared by melt polymerization of L-lactide (Puralact. L ex Purac) in a continuous pilot-scale polymerization reactor. The reactor consisted of an arrangement of static mixers and was continuously fed with 25kg/hr of molten lactide, 200ppm SnOct$_2$ catalyst and hexanol for molecular weight control. The reactor was operated in a temperature range of 160-200°C. In one experiment hydroperoxide was added to the molten polymer when the final degree of polymerisation was reached.
All prepared PLLA samples, whether or not they contained peroxide, contained about 7% of residual lactide upon discharge from the reactor and typically exhibited Mn of 100kg/mol as determined by GPC vs. PS calibration standards.
Melt stability was again assessed by means of rheology using the Anton Paar Plate-Plate Rheometer. Table 1 show complex viscosity data at an angular frequency of 11s$^{-1}$ and a temperature of 180 or 190°C. The third column gives the absolute value of melt viscosity of the PLLA determined directly after melting. The subsequent columns report the reduction in viscosity in consecutive measurements performed at time intervals of 5 min, each time as compared to the value obtained in the previous measure. PLLA samples treated with hydroperoxide in the final part of the polymerization reactor exhibited higher complex viscosities and significantly less degradation by depolymerization upon thermal treatment in the rheometer.

Table 1

| Sample | hydro-peroxide | Melt viscosity directly after melting | Reduction in melt viscosity after 5 min | Reduction in melt viscosity after 10 min | Reduction in melt viscosity after 5 min |
|---|---|---|---|---|---|
|  | wt.% | PA.s | % | % | % |
| 1@180°C | 0.08 | 4970 | 2.3 | 1.0 | N.D. |
| 1@190°C | 0.08 | 2840 | 4.4 | 3.0 | 3.1 |
| 2@180°C | 0 | 1280 | 7.6 | 5.3 | 3.7 |
| 3@.180°C | 0 | 1020 | 8.3 | 4.9 | 3.6 |

As can be seen from Table 1, the addition of peroxide significantly reduces the reduction in viscosity over time. The results of the samples containing perozide are even more remarkable because it would be expected that these sample, which have a higher initial viscosity would show a higher decrease in viscosity than the samples with a lower initial viscosity.
These examples demonstrate that melt-stability of reactor-grade polylactides is considerably improved upon treatment of the molten material with a hydroperoxide directly after lactide polymerization and prior to devolatilization.

**Claims**

1. A process for manufacturing polylactide comprising the steps of

    - combining lactide with a polymerisation catalyst,
    - subjecting the mixture to polymerization conditions to form polylactide in the liquid state,
    - adding an organic peroxide,
    - subjecting the liquid polylactide to a devolatilisation step, and
    - allowing the polylactide to solidify.

2. A process according to claim 1, wherein the catalyst is a catalyst of the formula

$$(M)(X1, X2 \ldots Xm)n \quad (I)$$

where M is selected from metals of Group 2, 4, 8, 9, 10, 12, 13, 14, and 15 of the Periodic Table of Elements, (X1, X2 . . . Xm) are independently selected from the group of alkyls, aryls, oxides, carboxylates, halides, alkoxides, alkylesters, m is an integer ranging from 1 to 6, and n is an integer ranging from 0 to 6, wherein the values for m and n depend on the oxidation state of the metal ion.

3. A process according to claim 2 wherein M is a metal ion in its lowest oxidation state, where the metal ion also possesses a higher oxidation state

4. A process according to claim 3 wherein M is selected from Sn(II), Pb(II), Sb(III), Bi (III), and Ti(II).

5. A process according to any one of the preceding claims wherein the catalyst is used in an amount of at least 5 ppm, calculated as metal and at most 1300 ppm, calculated as metal.

6. A process according to any one of the preceding claims, which is carried out in the substantial absence of added phosphorus-containing compounds.

7. A process according to any one of the preceding claims wherein the polymerisation is carried out in the substantial absence of added co-catalyst.

**Patentansprüche**

1. Ein Verfahren zur Herstellung von Polylactid, umfassend die Schritte:

    - Vereinigen von Lactid mit einem Polymerisationskatalysator,
    - Unterziehen des Gemischs Polymerisationsbedingungen, um Polylactid in flüssigem Zustand zu bilden,
    - Zugeben organischen Peroxids,
    - Unterziehen des flüssigen Polylactids einem Schritt des Entfernens der flüchtigen Bestandteile, und
    - fest werden lassen des Polylactids.

2. Ein Verfahren gemäß Anspruch 1, wobei der Katalysator ein Katalysator der Formel

$$(M)(X1, X2 \ldots Xm)n \qquad (I)$$

ist, wobei M ausgewählt ist aus Metallen der Gruppe 2, 4, 8, 9, 10, 12, 13, 14 und 15 des Periodensystems der Elemente, (X1, X2 ... Xm) unabhängig ausgewählt sind aus der Gruppe von Alkyl, Acryl, Oxiden, Carboxylaten, Halogeniden, Alkoxiden, Alkylestern, m eine ganze Zahl im Bereich von 1 bis 6 ist und n eine ganze Zahl im Bereich von 0 bis 6 ist, wobei die Werte für m und n von der Oxidationsstufe des Metallions abhängen.

3. Ein Verfahren gemäß Anspruch 2, wobei M ein Metallion in seiner niedrigsten Oxidationsstufe ist, wobei das Metallion auch eine Oxidationsstufe besitzt.

**4.** Ein Verfahren gemäß Anspruch 3, wobei M ausgewählt ist aus Sn(II), Pb(II), Sb(III), Bi (III) und Ti(II).

**5.** Ein Verfahren gemäß einem der vorherigen Ansprüche, wobei der Katalysator in einer Menge von mindestens 5 ppm, berechnet als Metall, und höchstens 1300 ppm, berechnet als Metall, verwendet wird.

**6.** Ein Verfahren gemäß einem der vorherigen Ansprüche, welches in wesentlicher Abwesenheit von zugegebenen Phosphor-enthaltenden Verbindungen durchgeführt wird.

**7.** Ein Verfahren gemäß einem der vorherigen Ansprüche, wobei die Polymerisation in wesentlicher Abwesenheit eines zugegebenen Co-Katalysators durchgeführt wird.

**Revendications**

**1.** Procédé de fabrication de polylactide comprenant les étapes qui consistent :

- à combiner un lactide avec un catalyseur de polymérisation,
- à soumettre le mélange à des conditions de polymérisation pour former le polylactide à l'état liquide,
- à ajouter un peroxyde organique,
- à soumettre le polylactide liquide à une étape de retrait des matières volatiles, et
- à permettre au polylactide de se solidifier.

**2.** Procédé selon la revendication 1, dans lequel le catalyseur est un catalyseur de formule :

$$(M) (X_1, X_2, ..., X_m)_n \qquad (I)$$

où M est choisi parmi les métaux du groupe 2, 4, 8, 9, 10, 12, 13, 14 et 15 du tableau périodique des éléments, ($X_1$, $X_2$, ..., $X_m$) sont indépendamment choisis parmi le groupe d'alkyles, d'aryles, d'oxydes, de carboxylates, d'halogénures, d'alcoxydes, d'alkylesters, m est un entier dans la plage de 1 à 6, et n est un entier dans la plage de 0 à 6, où les valeurs de m et n dépendent de l'état d'oxydation de l'ion métallique.

**3.** Procédé selon la revendication 2 dans lequel M est un ion métallique dans son état d'oxydation le plus bas, dans lequel l'ion métallique présente également un état d'oxydation supérieur.

**4.** Procédé selon la revendication 3, dans lequel M est choisi parmi : Sn(II), Pb(II), Sb(III), Bi(III) et Ti(II).

**5.** Procédé selon l'une quelconque des revendications précédentes dans lequel le catalyseur est utilisé en une quantité d'au moins 5 ppm, calculée en tant que métal et d'au plus 1300 ppm, calculée en tant que métal.

**6.** Procédé selon l'une quelconque des revendications précédentes, qui est réalisée pratiquement en l'absence du composé ajouté contenant du phosphore.

**7.** Procédé selon l'une quelconque des revendications précédentes dans lequel la polymérisation est réalisée pratiquement en l'absence de co-catalyseur ajouté.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1995970 A
- US 5338322 A
- US 6353036 B
- WO 09950345 A
- US 6153306 A
- US 5998 A
- US 6559244 B
- EP 882751 A
- US 5844066 A
- WO 9518169 A
- US 6166169 A